# EUROPEAN PATENT SPECIFICATION

(11) **EP 1 240 617 B1**
(45) Date of publication and mention of the grant of the patent: **18.02.2004**
(21) Application number: 00985600.6
(22) Date of filing: 18.12.2000
(51) Int. Cl.: G06F 3/033, G06K 11/00

(54) **CONTACT SENSITIVE DEVICE**
KONTAKTEMPFINDLICHE VORRICHTUNG
DISPOSITIF TACTILE

(30) Priority: 23.12.1999 GB 9930404; 20.10.2000 GB 0025771
(43) Date of publication of application: 18.09.2002
(73) Proprietor: New Transducers Limited, London SW3 3QH (GB)
(72) Inventor: HILL, Nicholas Patrick Roland, Cambridge CB1 4AW (GB)
(74) Representative: Maguire, Peter Albert
(86) International application number: PCT/GB2000/004851
(87) International publication number: WO 2001/048684

(56) References cited:
- WO-A-97/09842
- GB-A- 2 301 217
- US-A- 5 412 189
- US-A- 5 628 031
- US-A- 5 856 820

## Description

### TECHNICAL FIELD

The invention relates to contact sensitive devices.

### BACKGROUND ART

Visual displays often include some form of touch sensitive screen. This is becoming more common with the emergence of the next generation of portable multimedia devices such as palm top computers. The most established technology using waves to detect contact is Surface Acoustic Wave (SAW), which generates high frequency waves on the surface of a glass screen, and their attenuation by the contact of a finger is used to detect the touch location. This technique is "time-of-flight", where the time for the disturbance to reach one or more sensors is used to detect the location. Such an approach is possible when the medium behaves in a non-dispersive manner i.e. the velocity of the waves does not vary significantly over the frequency range of interest.

US-A-5691959 describes a touch sensitive device using acoustic waves originating from a stylus to determine the position of the stylus on a plate. The acoustic waves are introduced into the plate from the tip of the stylus and are detected by a plurality of detectors positioned at various points along the periphery of the plate.

US-A-5591945 represents the basis for the preambles of independent claims 1 and 38 and describes an acoustic touch position sensor having a transducer which imparts a wave into a substrate and a reflective array which reflects the wave. The reflected waves are partially absorbed, attenuated or perturbed by an object touching the substrate, to create a modified waveform having characteristics indicative of the axial displacement and/or contact condition of the object with the substrate.

### DISCLOSURE OF INVENTION

According to the invention, there is provided a method of determining information relating to a contact on a contact sensitive device comprising the steps of
providing a member capable of supporting bending waves,
contacting the member at a discrete location to produce a change in bending wave vibration in the member,
providing at least one measuring means attached to the member for measuring the changed bending wave vibration in the member to determine a measured bending wave signal and
processing the measured bending wave signal to calculate information relating to the contact characterised by applying a correction to convert the measured bending wave signal to a propagation signal from a non-dispersive wave source.

The contact may be in the form of a touch from a stylus or a finger. The stylus may be in the form of a hand-held pen.

The information calculated may be the location of the contact or may be other information, e.g. pressure or size of the contact. The information relating to the contact may be calculated in a central processor.

The bending wave propagation may be measured by at least one sensor which may be mounted at or spaced from an edge of the member. The sensor may be in the form of a sensing transducer which may convert bending wave vibration into an analogue input signal. There may be more than one sensor.

By bending wave vibration it is meant an excitation, for example by the contact, which imparts some out of plane displacement to the member. Many materials bend, some with pure bending with a perfect square root dispersion relation and some with a mixture of pure and shear bending. The dispersion relation describes the dependence of the in-plane velocity of the waves on the frequency of the waves. The relative magnitude of the vibration is determined by material properties of the member and the frequency of excitation.

Bending waves are dispersive i.e. the bending wave velocity is dependent on frequency. This property makes any "time-of-flight" approach inappropriate, as the signature of the disturbance progressively spreads out in time. Accordingly, the method further comprises the step of applying a correction to convert the measured bending wave signal to a propagation signal from a non-dispersive wave source. Once the correction is applied, techniques used in the fields of radar and sonar may be applied to detect the location of the contact.

One significant advantage of using bending wave propagation is that bending waves are bulk waves, which involve the movement of the whole member, and not just the surface. In contrast, most of the alternative touch sensing technologies rely on surface effects and as such are vulnerable to surface damage. Accordingly, a contact sensitive device using bending waves should be more robust and less sensitive to surface scratches, etc.

Applying the correction may be the first step in processing the bending wave signal. The correction applied is preferably based on the dispersion relation of the material of the member supporting the bending waves. This dispersion relation may either be modelled by using the bending wave equation in combination with known physical parameters of the material of the member. Alternatively, the dispersion relation may be measured by using a laser vibrometer to create an image of the vibration pattern in the member for a number of given frequencies to give the dispersion relation in the frequency range of interest.

The measuring of bending wave propagation may be done by continually sampling the motion in the member. By comparing the measured bending wave signal with a reference signal, for example the signal before a contact is made, it may be possible to identify when contact is made. The magnitude or other characteristics of the signal may be compared. Once contact has been made, the measured bending wave signal may be recorded and may then be processed.

The member may be in the form of a plate or panel. The member may be transparent or alternatively non-transparent, for example having a printed pattern. The member may have uniform thickness. Alternatively, the member may have a more complex shape, for example a curved surface and/or variable thickness. Provided it is possible for bending waves to travel from the contact position to one of the sensors (by whatever complex path), the method may be adapted for complex shaped members by providing an adaptive algorithm such as a neural net to decipher the contact location from the bending wave signal received by the sensor. It may be necessary to have several sensors.

The method may involve purely passive sensing, in other words, the change in bending wave vibration in the member induced by the contact may be the excitation to bending wave vibration in the member. In other words, there is no other source of bending wave vibration for a passive sensor. The position of the contact may be calculated by recording the time of arrival of an impulse at each sensor, comparing the times to determine the relative distances of each sensor from the origin of the impulse and intersecting the relative distances to give the position of the contact. The bending wave vibration and hence the measured bending wave signal may be generated by an initial impact or by frictional movement of the contact. There may be a minimum of three sensors.

Increasing the number of sensors used to detect the contact or contact location provides extra information and thus may provide a more accurate detection. Alternatively or additionally, the bending wave signal received at each sensor may be analysed over a longer period of time such that not only the direct signal, i.e. the signal when the impulse first reaches the transducer, is measured but also the reflections from the edges of the member. This approach is similar to adding mirrored versions of the or each existing sensor. Using this scheme, the extra information obtained may be used to provide greater accuracy or reduce the number of sensors.

After calculating the location of the contact, the measured bending wave signal may be further processed to determine additional information regarding the contact. The movement of a stylus on the member may generate a continuous signal which is affected by the location, pressure and speed of the stylus on the member. Continuous time data which may be derived from the continuous signal may be used to derive additional useful information in a variety of applications.

One application may be signature recognition which is a subset of the more general task of pattern recognition. Applications such as these, where patterns are drawn from complex data, benefit greatly from the extra independent information present in the continuous time data. The method may thus further comprise the step of implementing a neural net for processing continuous time data. The neural net may be trained by a set of examples, for example, a set of signatures written by a particular subject or a set generated from a knowledge of the typical variance caused by the human process of writing.

A fundamental property of a neural net is that the more independent information is available, the greater the accuracy of the conclusions drawn. Much of the information available in the continuous time data is completely independent from the position information, since it is connected to the velocity and pressure of the stylus on the surface of the member. Therefore the extra information increases the potential for accurate signature recognition. The method may further include the training of a second neural net with examples of time responses for signatures. Additional improvement may be achievable with training using further examples, either generated by the user or from knowledge of the expected variations in pressure and velocity.

Alternatively, the continuous time data may be used in handwriting recognition, the detection of a "double-click" or the detection of the strength of a contact, e.g. how hard a click. Both detection of "double-click" and click strength may be achieved with the image of the impulse shape in the continuous-time data. It may be possible to use a slower position sampling rate than other more conventional technology.

In contrast, conventionally the detection of a contact, be it pen, finger, etc., is performed at a pre-determined sample rate and the information concerning the contact location is built up from a set of points. There is no continuous time information and thus many of the applications described above may not be performed or may be performed less satisfactorily.

A measurement of the frequency content of the measured bending wave signal may be used to determine the contact type since the characteristic frequencies generated by each type of stylus differ. For example a hard stylus will generate higher frequencies than a soft finger. Thus, a contact sensitive device for use with a hand held pen-input device may be set up so as not to be triggered if the hand of the operator touches the contact sensitive device.

The differences in the frequency generated by different types of stylus imply a difference in the absolute spatial resolution achievable; the higher frequency translates to a greater resolution. However, the resolution difference often coincides with the requirements for the contact in question. For example, the spatial resolution required for an input by a finger is usually less than the spatial resolution expected for a sharp tipped stylus.

The frequencies generated by the contact are relatively low i.e. generally audio frequencies rather than ultrasonic. Consequently, the member is preferably capable of supporting bending wave vibration in the audio range. Thus, a member similar to those used as an acoustic radiator in a loudspeaker may also be used to act as a contact sensitive device.

The contact sensitive device may further comprise an emitting transducer mounted on the member to generate bending wave vibration in the member to probe for information relating to the contact. The member may thus be an acoustic radiator and bending wave vibration in the member may be used to generate an acoustic output. Such vibration may be regarded as a noise signal, although there are other types of noise signal which may effect the passive sensing. When there is an external noise signal, the method may further comprise techniques to isolate the noise signal from the signal generated by the contact, for example:
1) Prediction filtering which predicts the response of the noise signal over a short time scale. Differences from the predicted value are more likely to be generated by a contact than by the emitting transducers.
2) Modelling the noise signal using a continuous logging of the audio signal produced, together with knowledge of the transfer function from the emitting transducer to the sensor. This allows a more accurate prediction of the noise signal than prediction filtering.
3) Using the multiple sensors to determine the location of the emitting transducer in the same manner as used to locate the contact (for example, intersection method). This information should facilitate the separation of the bending waves generated by the emitting transducer from the bending waves generated by the contact.

Alternatively, the noise signal may be used as an active probe of a contact in the member. Thus, the method may further comprise generate bending waves in the member so that there is active sensing, in other words, sensing which relies not on the generation of waves by the contact but on the response of waves already present in the member to a mechanical constraint caused by the contact.

The bending waves in the member may be generated by a stimulus signal from a transducer mounted on the member. The transducer may have dual functionality, namely acting as an emitting transducer and a sensor. Alternatively, there may be an emitting transducer and at least one sensor mounted on the member.

The effect of the contact may be reflective, absorbing, or a combination of the two. For reflection, an emitting transducer generates bending waves, which are reflected by the contact and detected either by the same transducer or a separate sensor. The signal, either a time or frequency response, may then be processed with the material dispersion relation information to yield the distance travelled from the emitting transducer or source to the sensor via the contact.

One single measurement may be sufficient to differentiate between two contact locations which are a substantial distance apart. However, more information may be required to determine the contact location more accurately. This may be achieved by sensing the reflection with multiple sensors, where the stimulus signal may emanate from the emitting transducer or from a different source for some or all of the sensors. Either way, each sensor gives an independent measurement of the contact location, which may be combined to give a progressively more accurate contact location with increasing transducer number.

An alternative way to increase the location accuracy may be to measure the bending wave vibration in the member over a longer time, thus increasing the information in each measurement. In terms of a frequency response, this may correspond to a greater frequency resolution. The extended signal may also contain information concerning both direct and indirect reflection from the contact. Indirect reflection is a signal which arrives at the sensor from the contact via one or more boundary reflection. This method may be regarded as equivalent to adding further sensors at the mirror locations of the initial sensor, and may be employed to determine an accurate contact location with only one combined source/sensing transducer.

A self-measuring scheme may be incorporated into the contact sensitive device to measure the material dispersion relation in the member. When no contact is applied the boundary reflections are still present, which for a regular shape are manifest as strong reflections corresponding to the distances to each boundary. For a specific implementation, the emitting transducer, sensor and boundary locations are known which gives a set of known reference points. A smooth function representing the material dispersion relation may then be optimised to warp the frequency axis such that the periodicities corresponding to these reference points are restored. Further optimisation may be performed if required by adding other known reference points such as a contact in a pre-determined place.

This scheme allows an implementation of the active sensing technique without prior knowledge of the material dispersion relation. Alternatively it may be used to fine tune a correction for the small manufacturing tolerances present in the panel properties, or variations due to heat, humidity, etc.

Pure absorption requires a different implementation to a scheme based on reflection. Thus the method may comprise implementing a "ray tracing scheme", where the effect of the contact is to interrupt a wave incident on one or more of the sensors. A wave incident on a sensor may be created by direct excitation, e.g. by one or more emitting transducers at an opposed location, or by indirect excitation from one or more boundary reflections. For indirect excitation, the emitting transducer may be located at any position, including a position adjacent to the sensor. Furthermore, indirect excitation allows detection of an absorbing contact from a single transducer, which acts as the source and the sensor of the boundary reflections.

Interruption of the incident wave may also result in diffraction about the absorption point. The effect of diffraction makes the absorptive approach sensitive to a much wider area than is the case for pure ray tracing. The contact location may be outside a direct path of the bending wave incident on the sensor and may still affect the signal received by the sensor. The information obtained by absorption may be in a more complex form than that for a reflecting contact. Consequently a more intelligent detection algorithm may be required, such as a neural net.

The stimulus signal generated by the transducer preferably has good noise rejection, and preferably does not have an audibly damaging or acoustically obvious effect. Thus, the stimulus signal may have a very small amplitude or may be similar to noise. For the latter, a particular correlation may be hidden in the noise for the calculations to latch on to. Alternative, the stimulus signal may be made inaudible, i.e. ultrasonic by increasing the frequency above 20kHz. This has the advantage that a large signal amplitude can be used and the high frequency translates into a high spatial resolution. However, the member must be capable of supporting such an ultrasonic signal. Many materials are suitable, for example, glass, crystal polystyrene.

The stimulus signal may be chosen from any one of the following signals:
1. Pulsed excitation - note this does suffer from poor noise rejection and audibility, if it has sufficient amplitude.
2. Band limited noise - this signal is less audibly damaging than most in any given frequency band and has the advantage that it may be tuned to the most suitable frequency band. In addition it may be made ultrasonic.
3. Steady state sine waves - these give good signal to noise but are extremely audible when in the audio band. Improvements are to place the frequency outside the audio band or use multiple closely spaced sines with random relative phase, thus making the signal audibly more noise-like. This is one example of a signal that is audibly noise-like, but has a hidden correlation that improves the signal to noise level. Another example of such a trace is an MLS (Maximum Length Sequence) signal.
4. A chirp signal - this is a widely used signal to determine a frequency response of a system over broad range of frequencies. However this may be practical only at ultrasonic frequencies, where it is not audible.
5. An audio signal - this may be fed into the transducers when the member is being used as an acoustic radiator for a loudspeaker. In this case there is no problem with the stimulus signal having an audibly damaging effect, as it is the very signal responsible for the intended audio output.

When a sensor and an emitting transducer are close together or the same transducer, a background signal produced by the emitting transducer is generally much greater than the signal of interest associated with the contact. This may introduce problems which may be alleviated in a number of ways. For example, for a pulsed excitation signal, the measurement at the sensor may be gated so that measurement starts after an outgoing wave produced by the emitting transducer has progressed further than the sensor. However, extended time stimulus signal are more common than pulsed excitation signals since the latter has poor noise rejection properties.

For an extended time stimulus signal there are mechanical or other techniques which may be used to improve the relative magnitude of the contact signature, for example:
1) Placing the sensor at approximately ¼ wavelength from the emitting transducer so that the magnitude of the outgoing wave detected at the sensor location is minimised. This technique may be used if the contact signal is limited to a relatively narrow range of frequencies.
2) Locating the emitting transducer and the sensor at one drive point and designing the emitting transducer and the sensor to couple into orthogonal physical properties. For example, a bender transducer and an inertially coupled transducer may be located at the same point. An outgoing wave generated by either transducer is not detected by the other. However, a secondary wave which is either reflected from the contact or boundaries is detected, maximising its relative magnitude.
3) Addressing the problem in the electrical domain. A measurement of the frequency response may be achieved with a swept sine wave and a demodulation stage. The outgoing wave from the emitting transducer produces a large background value of the frequency response upon which the fine structure due to smaller reflections from the contact is superposed. After demodulation (e.g. by a chirp demodulation circuit) the output may be a small ripple on a large smoothly varying background. Consequently, when this output is passed through a high pass filter the pertinent fine structure may be emphasised relative to the large background.
4) Digitising the measured signal with sufficient accuracy so that it is sensitive to the fine structure on top of the large background. The fine structure may then be emphasised with filtering in the digital domain.

Depending on the use of the transducer it may either be a two, three, or four terminal device. Two terminal devices may be used as sensors or emitting transducers separately. Alternatively they may be used as dual function transducers, where a sensing function is determined from the impedance of the device. Three and four terminal devices use a separate transducer as sensor and emitting transducer. For a three-terminal device the sensor and emitting transducer share a common electrode, whereas the sensor and emitting transducer are electrically isolated in the four-terminal device.

The or each emitting transducer or sensor may be a bender transducer which is bonded directly to the member, for example
a piezoelectric transducer. The bender transducers are generally directional, which may be advantageous in some applications. The directivity achieved is determined by their physical shape and may therefore be tuned accordingly. Additional advantages include a high conversion efficiency, low cost, and considerable robustness.

Alternatively, the or each emitting transducer or sensor may be an inertial transducer which is coupled to the member at a single point. The inertial transducer may be either electrodynamic or piezoelectric. Inertial transducers are generally omni-directional, provided the contact point is small compared to the bending wavelength in the member at the frequency of interest.

The transducers and/or sensors may be placed with a relatively equal spacing around the edge or on the surface of the member subject to the specific topology of the application.

It may be possible to use audio transducers which are already in place as sensing and/or emitting transducers. This implementation may add the facility for a touch screen with the minimum of extra hardware. However, if this approach is not possible then small piezo elements might prove the most suitable transducers, as these are particularly suited to the ultrasonic frequencies which may be used for active sensing.

According to a second aspect of the invention, there is provided a contact sensitive device comprising a member capable of supporting bending wave vibration and a sensor mounted on the member for measuring bending wave vibration in the member and for transmitting a signal to a processor which processes information relating to a contact made on a surface on the member from the change in bending wave vibration in the member created by the contact characterised in that the processor applies a correction to convert the measured bending wave signal to a propagation signal from a non-dispersive wave source.

The contact sensitive device may be a passive sensor where bending wave vibration in the member is only excited by the contact and not by any other source. Alternatively, the contact sensitive device may be an active sensor. The contact sensitive device may thus further comprise an emitting transducer for exciting bending wave vibration in the member to probe for information relating to the contact. Information relating to the contact is calculated by comparing the response of waves generated by the emitting transducer to a mechanical constraint caused by the contact.

The member may be capable of supporting bending waves in the audio range. The contact sensitive device may thus be a loudspeaker such that an acoustic radiator of the loudspeaker acts as the member of the contact sensitive device and an exciter mounted on the acoustic radiator to excite bending wave vibration in the acoustic radiator to produce an acoustic output acts as the emitting transducer of the contact sensitive device.

The contact sensitive device may further comprise display means for presenting information related to the contact which is calculated by the processor. Thus, according to a third embodiment of the present invention, there is provided a display screen which is a contact sensitive device. The display screen may be a liquid crystal display screen comprising liquid crystals which may be used to excite or sense bending waves. The screen may be capable of supporting bending waves over a broad frequency range. Direct contact to the screen may trigger the contact sensitive device. This application therefore affords the possibility to make a standard LCD screen touch sensitive with no additional mechanical parts.

Since the method may be adapted to complex shapes, a contact sensitive device according to the invention may be included in a mobile phone, a laptop or a personal data assistant. For example, the keypad conventionally fitted to a mobile phone may be replaced by a continuous moulding which is touch sensitive according to the present invention. This approach may decrease costs and provide an extended area for use in audio applications. In a laptop, the touchpad which functions as a mouse controller may be replaced by a continuous moulding which is a contact sensitive device according to the invention. The moulding may be implemented as a mouse controller or other alternatives, e.g. a keyboard.

The advantages of the bending wave contact sensitive device and method compared to other technologies are:
1) A more versatile technology which is sensitive to both location and pressure of the contact;
2) A cheaper form of contact sensitive device since there is no requirement for an array of transparent contacts or a complex sensor of a magnetic tip etc,
3) The device is readily scaleable in size and spatial sensitivity by control of the material parameters of the member, and
4) By using a dual functioning member, good quality sound may be achieved within tight spatial and weight constraints.

### BRIEF DESCRIPTION OF DRAWINGS

The invention is diagrammatically illustrated, by way of example, in the accompanying drawings, in which:-
Figure 1 is an illustration of a touch sensitive loudspeaker according to the present invention;
Figure 2a and 2b are illustrations of a bending wave loudspeaker before and after contact is applied;
Figure 3 is a first loudspeaker incorporating passive touch sensing according to a second embodiment of the present invention;
Figure 4 is a second loudspeaker incorporating passive touch sensing according to a second embodiment of the present invention;
Figure 5 is a block diagram of a processing algorithm for passive sensing according to a first embodiment of the present invention;
Figure 6 is a first loudspeaker incorporating active touch sensing according to a first embodiment of the present invention;
Figure 7 is a first loudspeaker incorporating active touch sensing according to a first embodiment of the present invention;
Figure 8 is a block diagram of an implementation topology of the present invention;
Figure 9 is a block diagram of a processing algorithm for active sensing according to a first embodiment of the present invention, and
Figures 10a to 10d are a graphic illustration of a method of dispersion correction.

### BEST MODES FOR CARRYING OUT THE INVENTION

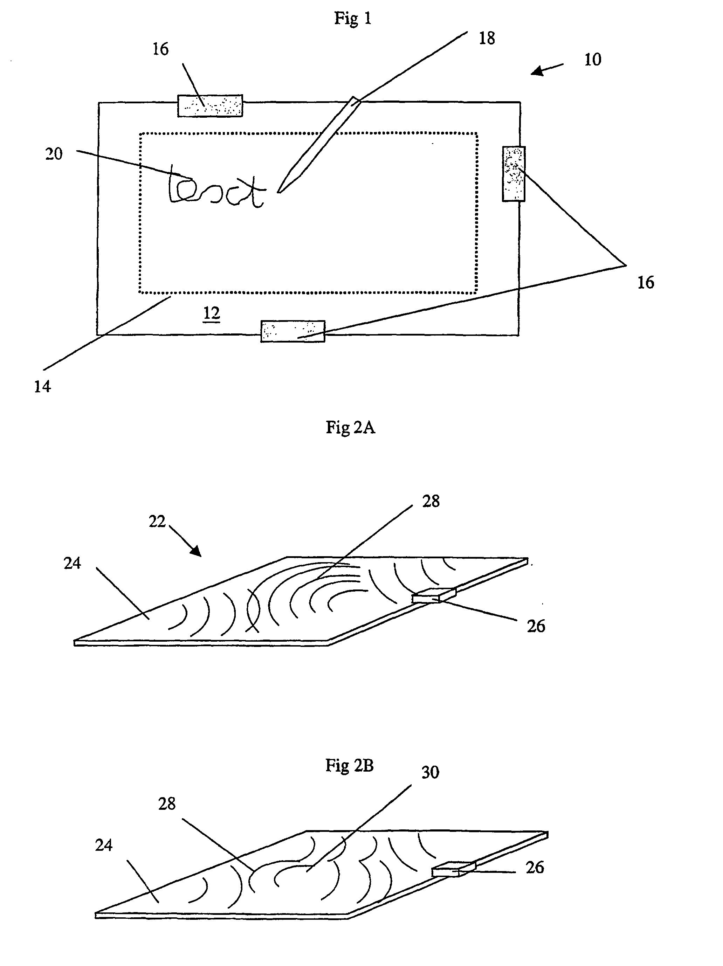

Figure 1 shows a contact sensitive device (10) comprising a transparent touch sensitive plate (12) mounted in front of a display device (14). The display device (14) may be in the form of a television, a computer screen or other visual display device. A stylus (18) in the form of a pen is used for writing text (20) or other matter on the touch sensitive plate (12).

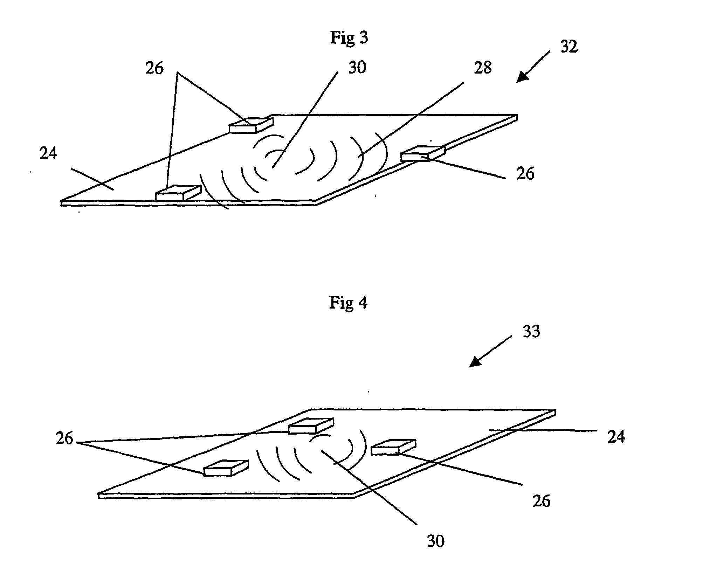

The transparent touch sensitive plate (12) is also an acoustic device capable of supporting bending wave vibration. Three transducers (16) are mounted on the plate (12). At least two of the transducers (16) are sensing transducers or sensors and are thus sensitive to and monitor bending wave vibration in the plate. The third transducer (16) may also be a sensing transducer so that the system corresponds to the passive contact sensitive device of Figure 3 or Figure 4.

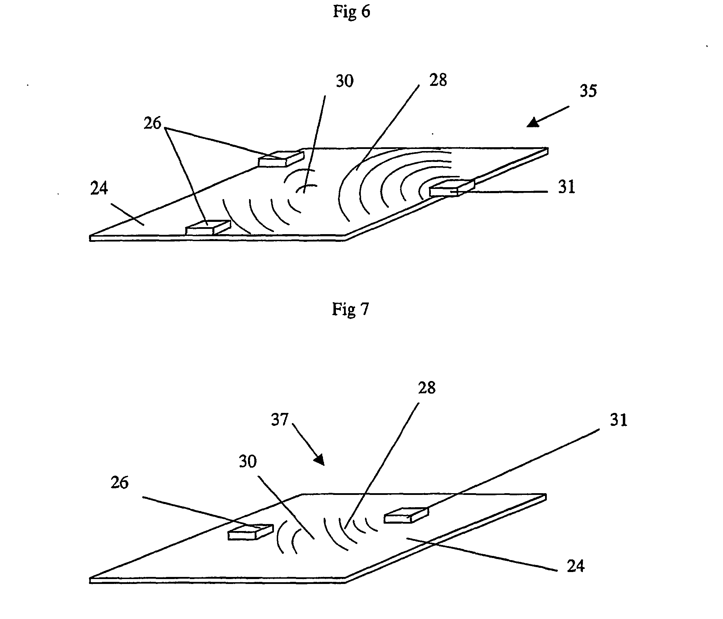

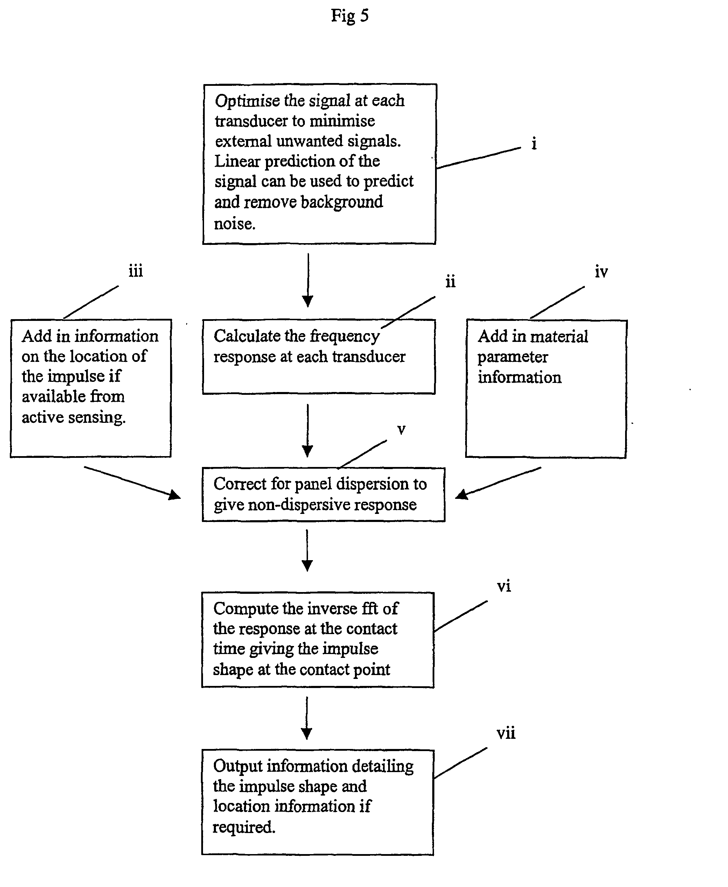

Alternatively, the third transducer may be an emitting transducer for exciting bending wave vibration in the plate so that the system corresponds to the active sensor of Figure 5. In the Figure 6 of Figure 7 embodiment, the active sensor may act as a combined loudspeaker and contact sensitive device.

Figures 2a and 2b illustrate the general principles of a contact sensitive device (22) using bending wave vibration as the sensing element. The contact sensitive device (22) comprises a panel (24) capable of supporting bending wave vibration and a sensing transducer (26) mounted on the panel (24) to sense bending wave vibration in the panel (24) at the point where the sensing transducer (26) is mounted. Figure 2a shows the vibration pattern (28) of bending wave vibration in this case the normal uninterrupted vibration pattern e.g. that of steady state at a given frequency or a transient pulse.

In Figure 2b, contact has been made to the panel (24) at contact point (30) and the pattern of vibration is altered. Contact may alter the vibration pattern (28) either by disturbing the path of bending waves already in the panel (24) or by generating new bending waves which emanate from the contact point (30). The change in vibration pattern (28) is sensed by the sensing transducer (26). Information relating to the contact may be determined from the readings of the sensing transducer, for example, by a first processing unit. The information may be relayed to a second processing unit which outputs the information on the display screen. The information may include details of the location and pressure profile of contact impulse, for example:
1) The x,y co-ordinates of the contact.
2) The characteristic size of the contact, e.g. 1mm corresponds to a pen or stylus, 1cm corresponds to a finger.
3) Profile of pressure of contact as a function of time.

Figures 3 and 4 are more detailed illustration of two contact sensitive devices (32,33). The contact sensitive devices (32,33) comprises a panel (24) capable of supporting bending wave vibration and three sensing transducers (26) for sensing bending wave vibration at their respective mounting points. The vibration pattern (28) is created when pressure is applied at a contact point (30). The devices may be considered to be passive contact sensitive devices since the devices do not comprise an emitting transducer. Thus the bending wave panel vibration in the panel is generated solely by the contact.

In a passive sensor an impulse in the body of the panel (24) starts a bending wave travelling towards the edge of the panel (24). The bending wave is detected by the three sensing transducers (26) mounted equidistantly around the edges as in Figure 3 or by the three sensing transducer mounted on a surface of the panel (24) but spaced from the edges of the panel (24) as in Figure 4. The measured bending wave signals processed to determine the spatial origin and force profile of the applied impulse.

Figure 5 shows an algorithm for the processing of the bending wave information sensed at each sensing transducer (26) of Figure 3 or Figure 4. The algorithm comprises the following steps:
i) Optimise the signal at each sensing transducer to minimise external unwanted signals. Linear prediction of the signal can be used to predict and remove background noise.
ii) Calculate the frequency response at each transducer.
iii) (Optional) Add in information on the location of the contact impulse if available from active sensing.
iv) Add in material parameter information.
v) Using the information available from steps (ii), (iii) and (iv); Correct for panel dispersion to give non-dispersive response.
vi) Compute the inverse fft of the response at the contact time giving the impulse shape at the contact point
vii) Output information detailing the impulse shape and location information if required.

The advantages of passive sensing include:-
1) the method encompasses more than one frequency and includes sufficient frequency content required to image the impulse shape, and
2) as the method is passive the power requirements are minimal.

One disadvantage of passive sensing is that the frequency content of the measured signal is limited by the frequency content of the impulse. Consequently the high frequency information is limited, which translates into a relatively long bending wavelength. The spatial resolution of the signal is therefore limited.

Figures 6 and 7 are more detailed illustrations of alternative combined touch sensitive and audio devices (35,37). The devices each comprise a panel (24) capable of supporting bending wave vibration and an emitting transducer (31) for exciting bending wave vibration in the panel (24). The device (35) in Figure 6 further comprise two additional sensing transducers (26) for sensing bending wave vibration at their respective mounting points whereas the device (37) in Figure 7 comprises one additional sensing transducer (26). The vibration pattern (28) is interrupted when pressure is applied at a contact point (30). The devices may be considered to be active contact sensitive devices since the devices comprise an emitting transducer (31).

In Figure 6, the sensing and emitting transducers (26,31) are spaced equidistantly around the edges of the panel (24) whereas in Figure 7, the sensing and emitting transducers (26,31) are distanced from the edges of the panel (24) and are mounted to a surface thereof. The transducers in Figure 7 are spaced equally on the surface of the panel.

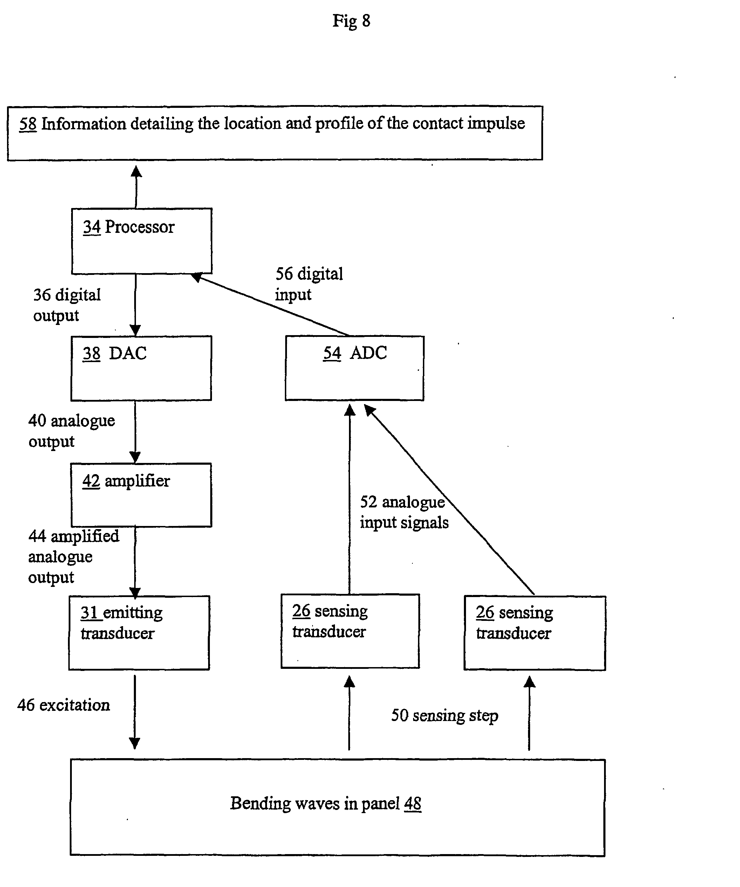

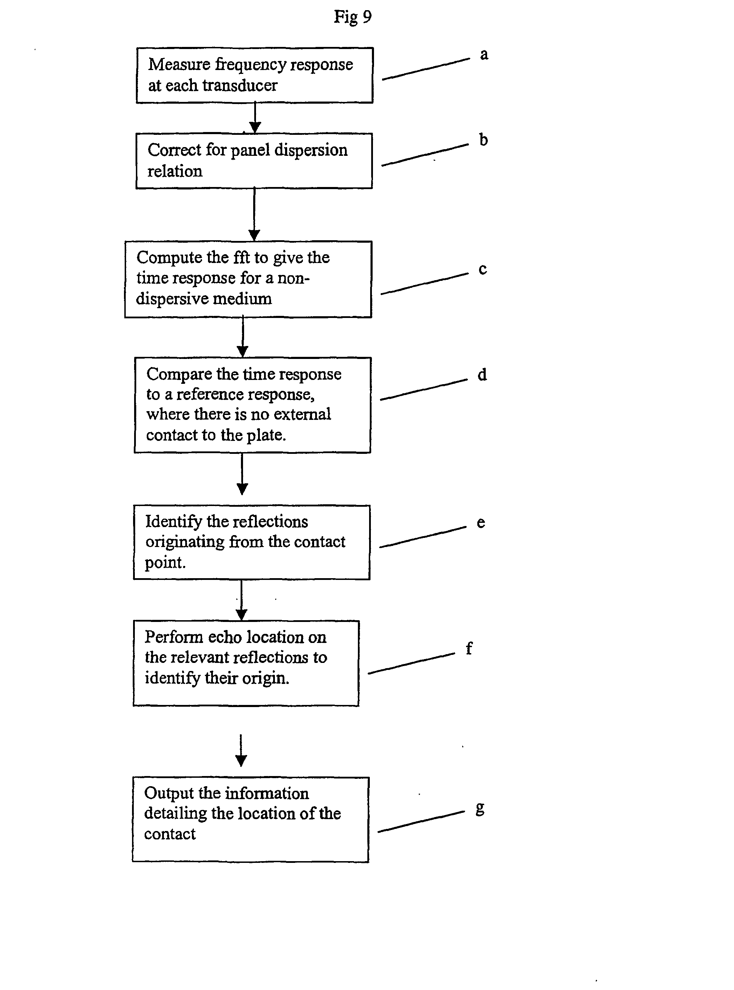

Figures 8 and 9 illustrate possible implementations of the active contact sensitive device. In Figure 8, the central processor (34) outputs a digital output signal (36) which is converted by the digital to analogue converter (DAC) (38) to an analogue output signal (40). The analogue output signal (40) is fed to an amplifier (42) which feeds an amplified analogue output signal (44) to the emitting transducer (31). The emitting transducer (31) emits bending wave excitation (46) which excites bending waves in the panel (48).

The bending waves in the panel (48) are sensed at sensing step (50) by two sensing transducers (26). The sensing transducers (26) convert the bending wave vibration into analogue input signals (52) which are fed into an input analogue to digital converter (ADC) (54). The resultant digital input signal (56) is transmitted to the central processor (34) from which information (58) relating to the location and profile of the contact impulse is determined.

In Figure 9, there is shown a method for determining the location of the contact point, the steps are as follows and may be performed by the central processor shown in Figure 6:
a) Measure frequency response at each sensing transducer.
b) Correct for panel dispersion relation
c) Compute the fft to give the time response for a non-dispersive medium
d) Compare the time response to a reference response, where there is no external contact to the panel
e) Identify the reflections originating from the contact point.
f) Perform echo location on the relevant reflections to identify their origin.
g) Output the information detailing the location of the contact.

Advantages of active sensing include:-
1) as the technique measures the response to an external signal, high frequency information is not limited and a high spatial resolution is possible, and
2) the susceptibility to external noise can be greatly reduced. This can be achieved by sensing the response in a frequency band where the external noise is small, such as above the audible spectrum. An alternative is to give the signal a particular correlation, enabling its detection even when small compared to the background noise.

Disadvantages of active sensing include:-
1) the technique is likely to be less sensitive to the profile of the impulse than the passive scheme. However, more sophisticated processing may improve this situation. For example, the greater the pressure of a finger or pen the larger the degree of extra damping likely to be introduced. This may be identified by a relative simple extra processing of the data, and
2) the need for an external signal is likely to require more power than the passive measurement. This drawback can be minimised by making the exciting signal as small as possible. Also, when the exciting signal is at high frequency piezo transducers may be employed, which have the advantage of a very high efficiency.

In many applications the one single implementation of the bending wave contact sensitive device may not be general enough to cope with all situations. For example a passive sensor will work well when there is no audio being played through the device. However, when loud music is being played, an active sensor, either at frequencies out of the audio band or using the musical signal as the stimulus, is more suited. Therefore a combination of more than one particular implementation may prove to be the best solution. Furthermore, in the transition region between the passive and active sensing there may be useful information obtainable from both techniques.

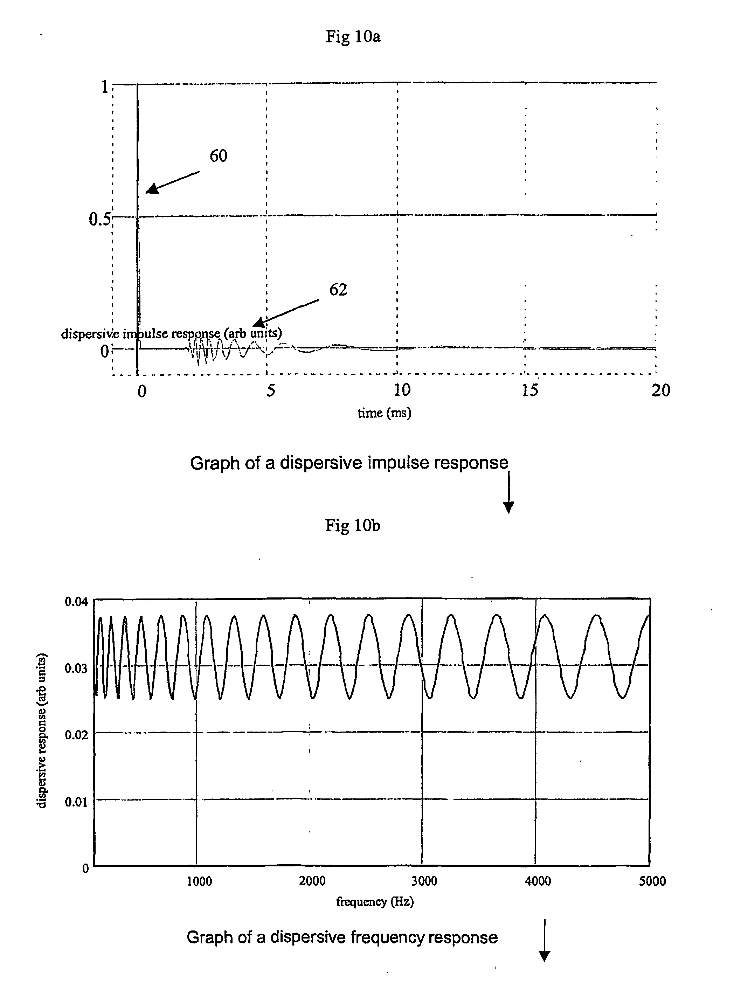

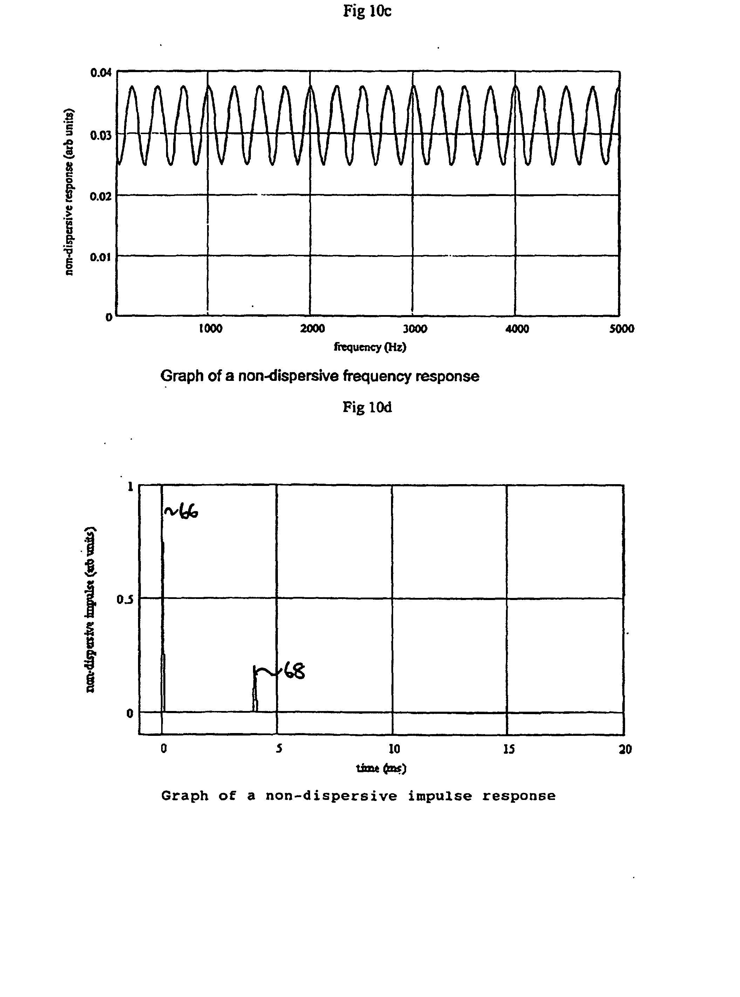

Figures 10a to 10d show the steps in one possible method of correcting to convert the measured bending wave signal to a propagation signal from a non-dispersive medium. Figure 10a is a graph of a dispersive impulse response showing response in arbitrary units against time. Figure 10b is a graph of a dispersive frequency response showing response in arbitrary units against frequency. Figure 10c is a graph of a non-dispersive frequency response showing response in arbitrary units against frequency. Figure 10d is a graph of a non-dispersive impulse response showing response in arbitrary units against time.

For pure plate bending, the wavespeed is proportional to the square root of frequency i.e. the high frequency component of any particular wave travels faster than the lower frequency components. Figure 10a shows an impulse in an ideal medium with a square root dispersion relation and demonstrates that a dispersive medium does not preserve the waveshape of an impulse. The outgoing wave (60) is evident at time t=0 and the echo signal (62) is spread out over time, which makes a determination of an exact contact position problematic.

A periodic variation of the frequency response is characteristic of a reflection, and is often referred to as comb filtering. Physically, the periodic variation in the frequency response derives from the number of wavelengths that fit between the source and the reflector. As the frequency is increased and the number of wavelengths fitting in this space increases, the interference of the reflected wave with the outgoing wave oscillates between constructive and destructive.

Calculating the Fourier transform of the dispersive impulse response of Figure 10a produces the frequency response shown in Figure 10b. The frequency response is non-periodic and the periodic variation with wavelength translates to a variation in frequency that gets slower with increasing frequency. This is a consequence of the square root dispersion in which the wavelength is proportional to the square root of the inverse of frequency. The effect of the panel on the frequency response is therefore to stretch the response as a function of frequency according to the panel dispersion. Consequently, a correction for the panel dispersion may be applied by applying the inverse stretch in the frequency domain, thus restoring the periodicity present in the non-dispersive case.

By warping the frequency axis with the inverse of the panel dispersion, Figure 10b may be transformed into the frequency response for the non-dispersive case (Figure 10c) in which the frequency of excitation is proportional to the inverse of the wavelength. This simple relationship translates the periodic variation with decreasing wavelength to a periodic variation with increasing frequency as shown in Figure 10c.

Applying the inverse Fast Fourier Transform (fft) to the trace of Figure 10c produces an impulse response shown in Figure 10d which is corrected for dispersion and where the clear reflection is restored. As is shown in Figure 10d any particular waveshape of an impulse is preserved in time since the waves travelling in a non-dispersive medium have a constant velocity of travel, independent of their frequency. Accordingly, the task of echo location is relatively straight forward. The outgoing wave (66) is evident at time t=0, together with a clear reflection (68) at 4ms. The reflection (68) has a magnitude which is approximately one-quarter of the magnitude of the outgoing wave (66).

### INDUSTRIAL APPLICABILITY

The invention thus provides a novel and advantageous contact sensitive device, and a contact sensitive device combined with a bending wave panel acoustic device.

## Claims

1. A method of determining information relating to a contact on a contact sensitive device (10,22,32,33,35,37) comprising the steps of
providing a member (12,24,48) capable of supporting bending waves,
contacting the member (12,24,48) at a discrete location to produce a change in bending wave vibration in the member (12,24,48),
providing at least one measuring means (16,26) attached to the member (12,24,48) for measuring the changed bending wave vibration in the member (12,24,48) to determine a measured bending wave signal and
processing the measured bending wave signal to calculate information relating to the contact **characterised by** applying a correction to convert the measured bending wave signal to a propagation signal from a non-dispersive wave source.

2. A method according to claim 1, wherein the correction applied is based on a dispersion relation of the material of the member (12,24,48).

3. A method according to claim 2, wherein the dispersion relation is modelled by using the bending wave equation in combination with known physical parameters of the material of the member (12,24,48).

4. A method according to claim 2, wherein the dispersion relation is measured by using a laser vibrometer to create an image of the vibration pattern in the member (12,24,48) for a number of given frequencies to give the dispersion relation in the frequency range of interest.

5. A method according to claim 2, wherein the dispersion relation is measured using a self-measuring scheme which is incorporated into the contact sensitive device.

6. A method according to any one of the preceding claims, wherein the or each measuring means (16,26) is in the form of a sensor (26).

7. A method according to claim 6, further comprising mounting the or each sensor (26) on an edge of the member (12,24,48).

8. A method according to claim 6, further comprising mounting the or each sensor (26) on the member (12,24,48) spaced from an edge of the member (12,24,48).

9. A method according to any one of the preceding claims, further comprising the step of comparing the measured bending wave signal with a reference signal to identify when contact is made.

10. A method according to any one of the preceding claims, wherein the information relating to the contact comprises the location of the contact.

11. A method according to any one of the preceding claims, wherein the information relating to the contact comprises the pressure of the contact.

12. A method according to any one of the preceding claims, wherein the information relating to the contact comprises the size of the contact.

13. A method according to any one of the preceding claims, wherein movement of the contact on the member (12,24,48) generates a continuous signal which is affected by the location, pressure and speed of the contact on the member (12,24,48) and continuous time data from the continuous signal is used to derive additional useful information relating to the contact.

14. A method according to claim 13, further comprising the step of implementing a neural net for processing continuous time data.

15. A method according to any one of the preceding claims, wherein the contact type is selected from a touch from a stylus (18) or a finger.

16. A method according to any one of the preceding claims, further comprising measuring the frequency content of the measured bending wave signal to determine the contact type.

17. A method according to any one of the preceding claims, further comprising providing the member (12,24,48) to be transparent.

18. A method according to any one of the preceding claims, further comprising providing the member (12,24,48) to be in the form of a panel.

19. A method according to any one of the preceding claims, further comprising providing the member (12,24,48) to have uniform thickness.

20. A method according to any one of claims 1 to 17, wherein the member has a complex shape and an adaptive algorithm is used to derive information relating to the contact from the measuring bending wave signal.

21. A method according to claim 20, wherein the adaptive algorithm is implemented in a neural net.

22. A method according to any one of the preceding claims, wherein the change in the bending wave vibration produced by the contact is the generation of bending wave vibration in the member (12,24,48).

23. A method according to claim 22, wherein the bending wave vibration is generated by frictional movement of the contact.

24. A method according to any one of the preceding claims, further comprising providing an emitting transducer (31) for mounted on the member (12,24,48) for generating bending wave vibration in the member (12,24,48).

25. A method according to claim 24, wherein the emitting transducer (31) generates bending wave vibration in the member (12,24,48) to probe for information relating to the contact

26. A method according to claim 25, further comprising providing an emitting transducer (31) having dual functionality acting as the emitting transducer (31) and a sensor (26).

27. A method according to claim 25 or claim 26, wherein the effect of the contact is reflective, such that bending waves generated by the emitting transducer (31) are reflected by the contact and detected by the or each sensor (26).

28. A method according to claim 25 or claim 26, wherein the effect of the contact is absorbing such that bending waves generated by the emitting transducer (31) are absorbed by the contact and detected by the or each sensor (26).

29. A method according to claim 25 or claim 26, wherein the effect of the contact is detected by the or each sensor (26) using indirect excitation from one or more boundary reflections.

30. A method according to any one of claims 25 to 28, wherein the bending wave vibration generated by the emitting transducer (31) is not acoustically obvious.

31. A method according to claim 30, wherein the bending wave vibration generated by the emitting transducer (31) is in the ultrasonic frequency range.

32. A method according to claim 30, wherein the bending wave vibration is background noise.

33. A method according to any one of claims 24 to 29, wherein the bending wave vibration generated by the emitting transducer (31) creates an acoustic output in the member (12,24,48) which acts as an acoustic radiator of a loudspeaker.

34. A method according to any one of the preceding claims, further comprising techniques to isolate undesired signals from the change in bending wave vibration generated by the contact.

35. A method according to any one of claims 25 to 34, further comprising placing the emitting transducer (31) and the or each sensor (26) with a relatively equal spacing around the periphery of the member (12,24,48).

36. A method according to any one of claims 25 to 34, further comprising locating the emitting transducer (31) and a sensor (26) at the same point and coupling the emitting transducer (31) and the sensor (26) into orthogonal physical properties.

37. A method according to claim 36, wherein the emitting transducer (31) is an inertial transducer and the sensor (26) is a bender transducer or vice *versa.*

38. A contact sensitive device (10,22,32,33,35,37) comprising a member (12,24,48) capable of supporting bending wave vibration and a sensor (26) mounted on the member (12,24,48) for measuring bending wave vibration in the member (12,24,48) and for transmitting a signal to a processor which processes information relating to a contact made on a surface on the member (12,24,48) from the change in bending wave vibration in the member (12,24,48) created by the contact **characterised in that** the processor (34) applies a correction to convert the measured bending wave signal to a propagation signal from a non-dispersive wave source.

39. A contact sensitive device according to claim 38, wherein the contact sensitive device further comprises an emitting transducer (31) for exciting bending wave vibration in the member (12,24,48).

40. A contact sensitive device according to claim 39, wherein the contact sensitive device (35,37) is a loudspeaker such that an acoustic radiator of the loudspeaker acts as the member (12,24,48) of the contact sensitive device (35,37) and an exciter mounted on the acoustic radiator to excite bending wave vibration in the acoustic radiator to produce an acoustic output acts as the emitting transducer (31) of the contact sensitive device.

41. A contact sensitive device according to claim 39 or claim 40, wherein the bending wave vibration excited in the member (12,24,48) is used to probe for information relating to the contact.

42. A contact sensitive device according to any one of claims 38 to 40, wherein the contact sensitive device (32,33) is a passive sensor where the change in bending wave vibration in the member (12,24,48) created by the contact is the generation of the bending wave vibration which is used to determine information about the contact.

43. A contact sensitive device according to any one of claims 38 to 42, further comprising display means (14).

44. A contact sensitive device according to claim 43, wherein the display screen is a liquid crystal display screen comprising liquid crystals which are used to excite or sense bending wave vibration in the member (12,24,48).

45. A contact sensitive device according to any one of claims 38 to 44, wherein the sensor (26) is mounted on an edge of the member (12,24,48).

46. A contact sensitive device according to any one of claims 38 to 44, wherein the sensor (26) is mounted on the member (12,24,48) spaced from an edge of the member (12,24,48).

47. A contact sensitive device according to any one of claims 38 to 46, wherein the member (12,24,48) is transparent.

48. A contact sensitive device according to any one of claims 38 to 47, wherein the member (12,24,48) is in the form of a panel.

49. A contact sensitive device according to any one of claims 38 to 48, wherein the member (12,24,48) has uniform thickness.

50. A contact sensitive device according to any one of claims 38 to 49, wherein the member has a complex shape.

51. A contact sensitive device according to any one of claims 38 to 50, when dependent on claim 39, wherein the emitting transducer (31) has dual functionality and acts as the emitting transducer and the sensor.

52. A contact sensitive device according to any one of claims 38 to 50, when dependent on claim 39, wherein the emitting transducer (31) and the sensor (26) are placed with a relatively equal spacing around the periphery of the member (12,24,48).

53. A contact sensitive device according to any one of claims 38 to 51, when dependent on claim 39, wherein the emitting transducer (31) and the sensor (26) are located at the same point and are coupled into orthogonal physical properties.

54. A contact sensitive device according to claim 53, wherein the emitting transducer (31) is an inertial transducer and sensor (26) is a bender transducer or vice versa.

55. A mobile phone comprising a contact sensitive device (10,22,32,33,35,37) according to any one of claims 38 to 54.

56. A lap-top comprising a contact sensitive device (10,22,32,33,35,37) according to any one of claims 38 to 54.

57. A personal data assistant comprising a contact sensitive device (10,22,32,33,35,37) according to any one of claims 38 to 54.

## Patentansprüche

1. Verfahren zur Ermittlung von Informationen betreffend einen Kontakt einer kontaktempfindlichen Vorrichtung (10, 22, 32, 33, 35, 37), umfassend die Schritte:
Bereitstellen eines zum Tragen von Biegewellen fähigen Elements (12, 24, 48),
Kontaktieren des Elements (12, 24, 48) an einer diskreten Stelle zur Erzeugung einer Biegewellenschwingungsänderung in dem Element (12, 24, 48),
Bereitstellen wenigstens eines an dem Element (12, 24, 48) angebrachten Messmittels (16, 26) zum Messen der geänderten Biegewellenschwingung in dem Element (12, 24, 48), um ein gemessenes Biegewellensignal zu bestimmen, und
Verarbeiten des gemessenen Biegewellensignals zur Berechnung von Informationen betreffend den Kontakt,
**gekennzeichnet durch** die Anwendung einer Korrektur, um das gemessene Biegewellensignal in ein Ausbreitungssignal von einer nicht-dispersiven Wellenquelle umzuwandeln.

2. Verfahren nach Anspruch 1, bei dem die angewendete Korrektur auf einer Dispersionsbeziehung des Materials des Elements (12, 24, 48) basiert.

3. Verfahren nach Anspruch 2, bei dem die Dispersionsbeziehung unter Verwendung der Biegewellengleichung in Verbindung mit bekannten physikalischen Parametern des Materials des Elements (12, 24, 48) modelliert wird.

4. Verfahren nach Anspruch 2, bei dem die Dispersionsbeziehung unter Verwendung eines Laser-Vibrometers gemessen wird, um ein Bild des Schwingungsmusters in dem Element für eine Anzahl gegebener Frequenzen zu erzeugen und so die Dispersionsbeziehung in dem interessierenden Frequenzbereich zu ermitteln.

5. Verfahren nach Anspruch 2, bei dem die Dispersionsbeziehung mit Hilfe eines in die kontaktempfindliche Vorrichtung integrierten Selbstmesssystems gemessen wird.

6. Verfahren nach einem der vorhergehenden Ansprüche, bei dem das oder jedes Messmittel (16, 26) in Form eines Sensors (26) vorliegt.

7. Verfahren nach Anspruch 6, ferner umfassend die Anbringung des oder jedes Sensors (26) an einem Rand des Elements (12, 24, 48).

8. Verfahren nach Anspruch 6, ferner umfassend die Anbringung des oder jedes Sensors (26) an dem Element (12, 24, 48) im Abstand von einem Rand des Elements (12, 24, 48).

9. Verfahren nach einem der vorhergehenden Ansprüche, ferner umfassend den Schritt des Vergleichens des gemessenen Biegewellensignals mit einem Referenzsignal, um die Herstellung eines Kontakts zu identifizieren.

10. Verfahren nach einem der vorhergehenden Ansprüche, bei dem die den Kontakt betreffenden Informationen den Ort des Kontakts umfassen.

11. Verfahren nach einem der vorhergehenden Ansprüche, bei dem die den Kontakt betreffenden Informationen den Druck des Kontakts umfassen.

12. Verfahren nach einem der vorhergehenden Ansprüche, bei dem die den Kontakt betreffenden Informationen die Größe des Kontakts umfassen.

13. Verfahren nach einem der vorhergehenden Ansprüche, bei dem eine Bewegung des Kontakts auf dem Element (12, 24, 48) ein durch den Ort, den Druck und die Geschwindigkeit des Kontakts auf dem Element (12, 24, 48) beeinflusstes kontinuierliches Signal erzeugt und zeitkontinuierliche Daten aus dem kontinuierlichen Signal dazu verwendet werden, zusätzliche nützliche Informationen in Bezug auf den Kontakt herzuleiten.

14. Verfahren nach Anspruch 13, ferner umfassend den Schritt der Einrichtung eines neuronalen Netzes zur Verarbeitung der zeitkontinuierlichen Daten.

15. Verfahren nach einem der vorhergehenden Ansprüche, bei dem die Kontaktart aus einer Berührung mit einem Stift (18) oder einem Finger ausgewählt wird.

16. Verfahren nach einem der vorhergehenden Ansprüche, ferner umfassend das Messen des Frequenzgehalts des gemessenen Biegewellensignals zur Bestimmung der Kontaktart.

17. Verfahren nach einem der vorhergehenden Ansprüche, ferner umfassend das Bereitstellen des Elements (12, 24, 48) solchermaßen, dass es transparent ist.

18. Verfahren nach einem der vorhergehenden Ansprüche, ferner umfassend das Bereitstellen des Elements (12, 24, 48) solchermaßen, dass es in Form einer Tafel vorliegt.

19. Verfahren nach einem der vorhergehenden Ansprüche, ferner umfassend das Bereitstellen des Elements (12, 24, 48) solchermaßen, dass es gleichmäßige Dicke besitzt.

20. Verfahren nach einem der Ansprüche 1 bis 17, bei dem das Element eine komplexe Gestalt besitzt und ein adaptiver Algorithmus verwendet wird, um den Kontakt betreffende Informationen aus dem gemessenen Biegewellensignal herzuleiten.

21. Verfahren nach Anspruch 20, bei dem der adaptive Algorithmus in einem neuronalen Netz implementiert wird.

22. Verfahren nach einem der vorhergehenden Ansprüche, bei dem die durch den Kontakt hervorgerufene Biegewellenschwingungsänderung die Erzeugung einer Biegewellenschwingung in dem Element (12, 24, 48) ist.

23. Verfahren nach Anspruch 22, bei dem die Biegewellenschwingung durch reibende Bewegung des Kontakts erzeugt wird.

24. Verfahren nach einem der vorhergehenden Ansprüche, ferner umfassend das Bereitstellen eines an dem Element (12, 24, 48) angebrachten abstrahlenden Wandlers zur Erzeugung einer Biegewellenschwingung in dem Element (12, 24, 48).

25. Verfahren nach Anspruch 24, bei dem der abstrahlende Wandler (31) eine Biegewellenschwingung in dem Element (12, 24, 48) erzeugt, um den Kontakt betreffende Informationen zu ermitteln.

26. Verfahren nach Anspruch 25, ferner umfassend das Bereitstellen eines eine duale Funktionalität besitzenden abstrahlenden Wandlers (31), der als abstrahlender Wandler (31) und als Sensor (26) wirkt.

27. Verfahren nach Anspruch 25 oder Anspruch 26, bei dem die Wirkung des Kontakts reflektierend ist, derart, dass von dem abstrahlenden Wandler (31) erzeugte Biegewellen durch den Kontakt reflektiert und von dem oder jedem Sensor (26) erfasst werden.

28. Verfahren nach Anspruch 25 oder 26, bei dem die Wirkung des Kontakts absorbierend ist, derart, dass von dem abstrahlenden Wandler (31) erzeugte Biegewellen durch den Kontakt absorbiert und von dem oder jedem Sensor (26) erfasst werden.

29. Verfahren nach Anspruch 25 oder Anspruch 26, bei dem die Wirkung des Kontakts von dem oder jedem Sensor (26) mittels indirekter Anregung von einer oder mehreren Grenzrefflektionen erfasst wird.

30. Verfahren nach einem der Ansprüche 25 bis 28, bei dem die von dem abstrahlenden Wandler (31) erzeugte Biegewellenschwingung nicht akustisch offensichtlich ist.

31. Verfahren nach Anspruch 30, bei dem die von dem abstrahlenden Wandler (31) erzeugte Biegewellenschwingung im Ultraschallfrequenzbereich liegt.

32. Verfahren nach Anspruch 30, bei dem die Biegewellenschwingung Hintergrundrauschen ist.

33. Verfahren nach einem der Ansprüche 24 bis 29, bei dem die von dem abstrahlenden Wandler (31) erzeugte Biegewellenschwingung eine akustische Ausgabe des Elements (12, 24, 48) hervorruft, das als akustischer Strahler eines Lautsprechers dient.

34. Verfahren nach einem der vorhergehenden Ansprüche, ferner umfassend Techniken zur Isolierung unerwünschter Signale von der durch den Kontakt hervorgerufenen Biegewellenschwingungsänderung.

35. Verfahren nach einem der Ansprüche 25 bis 34, ferner umfassend das Anordnen des abstrahlenden Wandlers (31) und des oder jedes Sensors (26) mit relativ gleichem Abstand entlang des Umfangs des Elements (12, 24, 48).

36. Verfahren nach einem der Ansprüche 25 bis 34, ferner umfassend das Anordnen des abstrahlenden Wandlers (31) und eines Sensors (26) am selben Ort und das Koppeln des abstrahlenden Wandlers (31) und des Sensors (26) mit orthogonalen physikalischen Eigenschaften.

37. Verfahren nach Anspruch 36, bei dem der abstrahlende Wandler (31) ein Inertialwandler ist und der Sensor (26) ein Biegewandler ist, oder umgekehrt.

38. Kontaktempfindliche Vorrichtung (10, 22, 32, 33, 35, 37), umfassend ein zum Tragen einer Biegewellenschwingung fähiges Element (12, 24, 48) sowie einen an dem Element (12, 24, 48) angebrachten Sensor (26) zum Messen einer Biegewellenschwingung in dem Element (12, 24, 48) und zum Übermitteln eines Signals zu einem Prozessor, welcher Informationen betreffend einen an einer Oberfläche des Elements (12, 24, 48) erfolgten Kontakt von der durch den Kontakt hervorgerufenen Biegewellenschwingungsänderung im Element (12, 24, 48) verarbeitet, **dadurch gekennzeichnet, dass** der Prozessor (34) eine Korrektur anwendet, um das gemessene Biegewellensignal in ein Ausbreitungssignal von einer nicht-dispersiven Wellenquelle umzuwandeln.

39. Kontaktempfindliche Vorrichtung nach Anspruch 38, wobei die kontaktempfindliche Vorrichtung ferner einen abstrahlenden Wandler (31) zum Anregen einer Biegewellenschwingung in dem Element (12, 24, 48) umfasst.

40. Kontaktempfindliche Vorrichtung nach Anspruch 39, wobei die kontaktempfindliche Vorrichtung (35, 37) ein Lautsprecher ist, derart, dass ein akustischer Strahler des Lautsprechers als das Element (12, 24, 48) der kontaktempfindlichen Vorrichtung (35, 37) wirkt und ein an dem akustischen Strahler angebrachter Erreger zur Anregung einer Biegewellenschwingung in dem akustischen Strahler zwecks Erzeugung einer akustischen Ausgabe als der abstrahlende Wandler (31) der kontaktempfindlichen Vorrichtung wirkt.

41. Kontaktempfindliche Vorrichtung nach Anspruch 39 oder Anspruch 40, bei der die in dem Element (12, 24, 48) angeregte Biegewellenschwingung zur Ermittlung den Kontakt betreffender Informationen verwendet wird.

42. Kontaktempfindliche Vorrichtung nach einem der Ansprüche 38 bis 40, wobei die kontaktempfindliche Vorrichtung (32, 33) ein passiver Sensor ist, bei dem die durch den Kontakt hervorgerufene Biegewellenschwingungsänderung in dem Element (12, 24, 48) die Erzeugung der Biegewellenschwingung ist, welche dazu verwendet wird, Informationen über den Kontakt zu ermitteln.

43. Kontaktempfindliche Vorrichtung nach einem der Ansprüche 38 bis 42, ferner umfassend Anzeigemittel (14).

44. Kontaktempfindliche Vorrichtung nach Anspruch 43, wobei der Anzeigeschirm ein Flüssigkristallanzeigeschirm mit Flüssigkristallen ist, welche zur Anregung oder Erfassung einer Biegewellenschwingung in dem Element (12, 24, 48) verwendet werden.

45. Kontaktempfindliche Vorrichtung nach einem der Ansprüche 38 bis 44, bei der der Sensor (26) an einem Rand des Elements (12, 24, 48) angebracht ist.

46. Kontaktempfindliche Vorrichtung nach einem der Ansprüche 38 bis 44, bei der der Sensor (26) an dem Element (12, 24, 48) im Abstand von einem Rand des Elements (12, 24, 48) angebracht ist.

47. Kontaktempfindliche Vorrichtung nach einem der Ansprüche 38 bis 46, bei der das Element (12, 24, 48) transparent ist.

48. Kontaktempfindliche Vorrichtung nach einem der Ansprüche 38 bis 47, bei der das Element (12, 24, 48) in Form einer Tafel vorliegt.

49. Kontaktempfindliche Vorrichtung nach einem der Ansprüche 38 bis 48, bei der das Element (12, 24, 48) gleichmäßige Dicke besitzt.

50. Kontaktempfindliche Vorrichtung nach einem der Ansprüche 38 bis 49, bei der das Element eine komplexe Gestalt besitzt.

51. Kontaktempfindliche Vorrichtung nach einem der Ansprüche 38 bis 50 in Verbindung mit Anspruch 39, bei der der abstrahlende Wandler (31) eine duale Funktionalität besitzt und als abstrahlender Wandler und als Sensor wirkt.

52. Kontaktempfindliche Vorrichtung nach einem der Ansprüche 38 bis 50 in Verbindung mit Anspruch 39, bei der der abstrahlende Wandler (31) und der Sensor (26) mit relativ gleichem Abstand entlang des Umfangs des Elements (12, 24, 48) angeordnet sind.

53. Kontaktempfindliche Vorrichtung nach einem der Ansprüche 38 bis 51 in Verbindung mit Anspruch 39, bei der der abstrahlende Wandler (31) und der Sensor (26) am selben Ort angeordnet sind und mit orthogonalen physikalischen Eigenschaften gekoppelt sind.

54. Kontaktempfindliche Vorrichtung nach Anspruch 53, bei der der abstrahlende Wandler (31) ein Inertialwandler ist und der Sensor (26) ein Biegewandler ist, oder umgekehrt.

55. Mobiltelefon mit einer kontaktempfindlichen Vorrichtung (10, 22, 32, 33, 35, 37) nach einem der Ansprüche 38 bis 54.

56. Laptop-Computer mit einer kontaktempfindlichen Vorrichtung (10, 22, 32, 33, 35, 37) nach einem der Ansprüche 38 bis 54.

57. Persönlicher Datenassistent mit einer kontaktempfindlichen Vorrichtung (10, 22, 32, 33, 35, 37) nach einem der Ansprüche 38 bis 54.

## Revendications

1. Un procédé de détermination d'information concernant un contact sur un dispositif sensible au contact (10, 22, 32, 33, 35, 37), comprenant les étapes suivantes :
on fournit un élément (12, 24, 48) capable de supporter des ondes de flexion,
on établit un contact avec l'élément (12, 24, 48) à un emplacement discret pour produire un changement dans la vibration d'ondes de flexion dans l'élément (12, 24, 48),
on fournit au moins un moyen de mesure (16, 26) fixé à l'élément (12, 24, 48) pour mesurer la vibration d'ondes de flexion changée dans l'élément (12, 24, 48), pour déterminer un signal d'ondes de flexion mesuré, et
on traite le signal d'ondes de flexion mesuré pour calculer une information concernant le contact, **caractérisé par** l'application d'une correction pour convertir le signal d'ondes de flexion mesuré en un signal de propagation à partir d'une source d'ondes non dispersives.

2. Un procédé selon la revendication 1, dans lequel la correction appliquée est basée sur une relation de dispersion du matériau de l'élément (12, 24, 48).

3. Un procédé selon la revendication 2, dans lequel la relation de dispersion est modélisée en utilisant l'équation d'ondes de flexion en combinaison avec des paramètres physiques connus du matériau de l'élément (12, 24, 48).

4. Un procédé selon la revendication 2, dans lequel la relation de dispersion est mesurée en utilisant un vibromètre à laser pour créer une image de la configuration de vibration dans l'élément (12, 24, 48) pour un certain nombre de fréquences données, pour fournir la relation de dispersion dans la gamme de fréquence d'intérêt.

5. Un procédé selon la revendication 2, dans lequel la relation de dispersion est mesurée en utilisant une technique d'auto-mesure qui est incorporée dans le dispositif sensible au contact.

6. Un procédé selon l'une quelconque des revendications précédentes, dans lequel le ou chaque moyen de mesure (16, 26) et sous la forme d'un capteur (26).

7. Un procédé selon la revendication 6, comprenant en outre le montage du ou de chaque capteur (26) sur un bord de l'élément (12, 24, 48).

8. Un procédé selon la revendication 6, comprenant en outre le montage du ou de chaque capteur (26) sur l'élément (12, 24, 48) à distance d'un bord de l'élément (12,24,48).

9. Un procédé selon l'une quelconque des revendications précédentes, comprenant en outre l'étape de comparaison du signal d'ondes de flexion mesuré avec un signal de référence, pour identifier le moment auquel un contact est établi.

10. Un procédé selon l'une quelconque des revendications précédentes, dans lequel l'information concernant le contact comprend l'emplacement du contact.

11. Un procédé selon l'une quelconque des revendications précédentes, dans lequel l'information concernant le contact comprend la pression du contact.

12. Un procédé selon l'une quelconque des revendications précédentes, dans lequel l'information concernant le contact comprend la taille du contact.

13. Un procédé selon l'une quelconque des revendications précédentes, dans lequel un mouvement du contact sur l'élément (12, 24, 48) génère un signal continu qui est affecté par l'emplacement, la pression et la vitesse du contact sur l'élément (12, 24, 48), et des données temporelles continues provenant du signal continu sont utilisées pour calculer une information utile supplémentaire concernant le contact.

14. Un procédé selon la revendication 13, comprenant en outre l'étape de réalisation d'un réseau neuronal pour traiter des données temporelles continues.

15. Un procédé selon l'une quelconque des revendications précédentes, dans lequel le type de contact est sélectionné parmi un toucher par un stylet (18) ou un doigt.

16. Un procédé selon l'une quelconque des revendications précédentes, comprenant en outre la mesure du contenu en fréquence du signal d'ondes de flexion mesuré, pour déterminer le type de contact.

17. Un procédé selon l'une quelconque des revendications précédentes, comprenant en outre la fourniture de l'élément (12, 24, 48) de façon qu'il soit transparent.

18. Un procédé selon l'une quelconque des revendications précédentes, comprenant en outre la fourniture de l'élément (12, 24, 48) de façon qu'il ait la forme d'un panneau.

19. Un procédé selon l'une quelconque des revendications précédentes, comprenant en outre la fourniture de l'élément (12, 24, 48) de façon qu'il ait une épaisseur uniforme.

20. Un procédé selon l'une quelconque des revendications 1 à 17, dans lequel l'élément a une forme complexe et un algorithme adaptatif est utilisé pour obtenir une information concernant le contact à partir du signal d'ondes de flexion mesuré.

21. Un procédé selon la revendication 20, dans lequel l'algorithme adaptatif est mis en oeuvre dans un réseau neuronal.

22. Un procédé selon l'une quelconque des revendications précédentes, dans lequel le changement dans la vibration d'ondes de flexion qui est produit par le contact est la génération d'une vibration d'ondes de flexion dans l'élément (12, 24, 48).

23. Un procédé selon la revendication 22, dans lequel la vibration d'ondes de flexion est générée par un mouvement de friction du contact.

24. Un procédé selon l'une quelconque des revendications précédentes, comprenant en outre la fourniture d'un transducteur émetteur (31) destiné à être monté sur l'élément (12, 24, 48) pour générer une vibration d'ondes de flexion dans l'élément (12, 24, 48).

25. Un procédé selon la revendication 24, dans lequel le transducteur émetteur (31) génère une vibration d'ondes de flexion dans l'élément (12, 24, 48) pour détecter une information concernant le contact.

26. Un procédé selon la revendication 25, comprenant en outre la fourniture d'un transducteur émetteur (31) ayant une double fonction, agissant comme le transducteur émetteur (31) et comme un capteur (26).

27. Un procédé selon la revendication 25 ou la revendication 26, dans lequel l'effet du contact est réfléchissant, ce qui fait que des ondes de flexion générées par le transducteur émetteur (31) sont réfléchies par le contact et détectées par le ou chaque capteur (26).

28. Un procédé selon la revendication 25 ou la revendication 26, dans lequel l'effet du contact est absorbant, ce qui fait que des ondes de flexion générées par le transducteur émetteur (31) sont absorbées par le contact et détectées par le ou chaque capteur (26).

29. Un procédé selon la revendication 25 ou la revendication 26, dans lequel l'effet du contact est détecté par le ou chaque capteur (26) en utilisant une excitation indirecte à partir d'une ou plusieurs réflexions aux limites.

30. Un procédé selon l'une quelconque des revendications 25 à 28, dans lequel la vibration d'ondes de flexion générée par le transducteur émetteur (31) n'est pas acoustiquement évidente.

31. Un procédé selon la revendication 30, dans lequel la vibration d'ondes de flexion générée par le transducteur émetteur (31) est dans la gamme de fréquence ultrasonore.

32. Un procédé selon la revendication 30, dans lequel la vibration d'ondes de flexion est du bruit de fond.

33. Un procédé selon l'une quelconque des revendications 24 à 29, dans lequel la vibration d'ondes de flexion générée par le transducteur émetteur (31) crée une émission acoustique dans l'élément (12, 24, 48) qui agit comme un radiateur acoustique d'un haut-parleur.

34. Un procédé selon l'une quelconque des revendications précédentes, comprenant en outre des techniques pour isoler des signaux non désirés à partir du changement de vibration d'ondes de flexion généré par le contact.

35. Un procédé selon l'une quelconque des revendications 25 à 34, comprenant en outre le placement du transducteur émetteur (31) et du ou de chaque capteur (26) avec un espacement relativement égal autour de la périphérie de l'élément (12, 24, 48).

36. Un élément selon l'une quelconque des revendications 25 à 34, comprenant en outre le placement du transducteur émetteur (31) et d'un capteur (26) au même point, et le couplage du transducteur émetteur (31) et du capteur (26) vers des propriétés physiques orthogonales.

37. Un procédé selon la revendication 36, dans lequel le transducteur émetteur (31) est un transducteur inertiel et le capteur (26) est un transducteur à flexion, ou inversement.

38. Un dispositif sensible au contact (10, 22, 32, 33, 35, 37) comprenant un élément (12, 24, 48) capable de supporter une vibration d'ondes de flexion et un capteur (26) monté sur l'élément (12, 24, 48) pour mesurer une vibration d'ondes de flexion dans l'élément (12, 24, 48), et pour émettre un signal vers un dispositif de traitement qui traite de l'information concernant un contact établi sur une surface de l'élément (12, 24, 48), d'après le changement dans la vibration d'ondes de flexion de l'élément (12, 24, 48) qui est créé par le contact, **caractérisé en ce que** le dispositif de traitement (34) applique une correction pour convertir le signal d'ondes de flexion mesuré en un signal de propagation provenant d'une source d'ondes non dispersives.

39. Un dispositif sensible au contact selon la revendication 38, dans lequel le dispositif sensible au contact comprend en outre un transducteur émetteur (31) pour exciter une vibration d'ondes de flexion dans l'élément (12, 24, 48).

40. Un dispositif sensible au contact selon la revendication 39, dans lequel le dispositif sensible au contact (35, 37) est un haut-parleur, de façon qu'un radiateur acoustique du haut-parleur agisse comme l'élément (12, 24, 48) du dispositif sensible au contact (35, 37), et qu'un excitateur monté sur le radiateur acoustique pour exciter une vibration d'ondes de flexion dans le radiateur acoustique pour produire une émission acoustique, agisse comme le transducteur émetteur (31) du dispositif sensible au contact.

41. Un dispositif sensible au contact selon la revendication 39 ou la revendication 40, dans lequel la vibration d'ondes de flexion excitée dans l'élément (12, 24, 48) est utilisée pour obtenir de l'information concernant le contact.

42. Un dispositif sensible au contact selon l'une quelconque des revendications 38 à 40, dans lequel le dispositif sensible au contact (32, 33) est un capteur passif dans lequel le changement dans la vibration d'ondes de flexion dans l'élément (12, 24, 48) créé par le contact, est la génération de la vibration d'ondes de flexion qui est utilisée pour déterminer de l'information concernant le contact.

43. Un dispositif sensible au contact selon l'une quelconque des revendications 38 à 42, comprenant en outre un moyen de visualisation (14).

44. Un dispositif sensible au contact selon la revendication 43, dans lequel l'écran de visualisation est un écran de visualisation à cristaux liquides comprenant des cristaux liquides qui sont utilisés pour exciter ou détecter une vibration d'ondes de flexion dans l'élément (12, 24, 48).

45. Un dispositif sensible au contact selon l'une quelconque des revendications 38 à 44, dans lequel le capteur (26) est monté sur un bord de l'élément (12, 24, 48).

46. Un dispositif sensible au contact selon l'une quelconque des revendications 38 à 44, dans lequel le capteur (26) est monté sur l'élément (12, 24, 48) à distance d'un bord de l'élément (12, 24, 48).

47. Un dispositif sensible au contact selon l'une quelconque des revendications 38 à 46, dans lequel l'élément (12, 24, 48) est transparent.

48. Un dispositif sensible au contact selon l'une quelconque des revendications 38 à 47, dans l'élément (12, 24, 48) est sous la forme d'un panneau.

49. Un dispositif sensible au contact selon l'une quelconque des revendications 38 à 48, dans lequel l'élément (12, 24, 48) a une épaisseur uniforme.

50. Un dispositif sensible au contact selon l'une quelconque des revendications 38 à 49, dans lequel l'élément a une forme complexe.

51. Un dispositif sensible au contact selon l'une quelconque des revendications 38 à 50, lorsqu'elles sont rattachées à la revendication 39, dans lequel le transducteur émetteur (31) a une double fonction et agit comme le transducteur émetteur et comme le capteur.

52. Un dispositif sensible au contact selon l'une quelconque des revendications 38 à 50, lorsqu'elles sont rattachées à la revendication 39, dans lequel le transducteur émetteur (31) et le capteur (26) sont placés avec un espacement relativement égal autour de la périphérie de l'élément (12, 24, 48).

53. Un dispositif sensible au contact selon l'une quelconque des revendications 38 à 51, lorsqu'elles sont rattachées à la revendication 39, dans lequel le transducteur émetteur (31) et le capteur (26) sont placés au même point et sont couplés vers des propriétés physiques orthogonales.

54. Un dispositif sensible au contact selon la revendication 53, dans lequel le transducteur émetteur (31) est un transducteur inertiel et le capteur (26) est un transducteur à flexion, ou inversement.

55. Un téléphone mobile comprenant un dispositif sensible au contact (10, 22, 32, 33, 35, 37) selon l'une quelconque des revendications 38 à 54.

56. Un ordinateur portable comprenant un dispositif sensible au contact (10, 22, 32, 33, 35, 37) selon l'une quelconque des revendications 38 à 54.

57. Un assistant numérique personnel comprenant un dispositif sensible au contact (10, 22, 32, 33, 35, 37) selon l'une quelconque des revendications 38 à 54.
